# EUROPEAN PATENT APPLICATION

(11) **EP 1 258 826 A1**
(43) Date of publication of application: **20.11.2002**
(21) Application number: 02253296.4
(22) Date of filing: 10.05.2002
(51) Int. Cl.: G06F 17/60

(54) **Methods and systems for trading of futures contracts for intangible assets**

(30) Priority: 14.05.2001 US 290712 P; 12.12.2001 US 15738
(71) Applicant: CFPH, L.L.C., New York, NY 10171 (US)
(72) Inventor: Lutnick, Howard W., New York, NY 10021 (US); Kirwin, Glenn D., deceased (US); Gilbert, Andrew C., deceased (US)
(74) Representative: Jones, David Colin

(57) **Abstract**

Methods and systems for trading of future contracts for intangible assets are provided. The methods and systems allow traders to access information on intangible asset futures contracts and future contract funds and to execute their trades in a computer-based futures exchange. Intangible assets include future royalties or revenues from artistic works or future salaries of professionals, for instance. The futures exchange system provides real-time trading status on the futures contracts or funds as well as detailed information on contract terms. Quotes may be matched automatically by the futures exchange. Sensitivity analysis of various factors on the outcome of futures contracts valuation may be provided. Additionally, offer and contract terms for categories of intangible assets may be standardized in the futures exchange for trading simplification.

## Description

### Cross Reference To Related Application

This application claims the benefit of United States provisional application Serial No. 60/290,712 filed May 14, 2001.

### Background of the Invention

This invention relates to processes for financial contracts trading. More particularly, this invention relates to methods and systems for providing intangible asset trading of futures contracts in a futures exchange.

A futures contract is a standardized agreement under which a contracting party undertakes to buy or sell a quantity and quality of an asset in the future at a price agreed to at the time of the transaction. Sellers of assets use futures contracts to lock in buyers at a fixed price to protect themselves from fluctuations in the price over time and to secure a profit margin between their selling and purchase costs. Additionally, those having an interest in a future event may obtain current capital to ensure the future event may occur. Futures contracts may be bought and sold in a futures exchange, which is a marketplace for trading. Individual futures contracts may be traded or the contracts may be grouped by, for example, type, relative risk or market and then the contracts within the group may be simultaneously traded. This grouping of contracts is known as a future contracts fund. Additionally, there are futures contract types known as options where the buyer has the option to buy or sell an asset at a specified price, known as the strike price, before an expiration date. Another type of a futures contract is the forward type where payment for the contract is due in full at the time of, or after, delivery of the asset, as compared to daily settlement of the contract.

Trading of futures contracts in futures exchanges has historically been performed by an open outcry method, where traders representing buyers and sellers stand in designated areas, known as pits, and call out bids and offers of sale and then execute trades. Computer-based electronic future trading systems are now available that allow posting of buy and sell offers, associated offer matching and trade execution.

Buyers and sellers of futures contracts are speculating on price movement of the asset. A buyer may purchase a futures contract anticipating a price increase, i.e., buying "long," with subsequent resale at a higher price. If a buyer speculates that the price of an asset will drop, they can sell "short," that is, attempt to profit in the subsequent sale of the contract by purchasing an off-setting contract at a lower price.

The use of futures contracts and trading thereof has been limited to assets such as physical commodities or financial instruments. A futures contract requires the delivery of a specific quantity of the asset to a buyer at the date of expiration of the contract. Futures contracts typically specify the amount, quality, date and location of delivery, means of delivery, method of payment and futures exchange to be used. Due, in part, to the nature of the future exchanges used in the past, that is, the open outcry method where trading is done by humans signal or verbal communication, it has been necessary to standardize contract terms as well as the type and characteristics of underlying asset so as to allow timely, accurate and low cost transactions to be possible. Assets have to be separable into homogeneous units, i.e. identical in quality and quantity. If that may not be possible, the asset may alternatively be required to be readily standardizable and capable of being graded. To-date, assets traded using futures contracts in a futures exchange have been tangible assets, i.e. commodities such as wheat, oil, pork bellies or financial securities, that meet required asset criteria as required in an open outcry system. The development of computer trading future exchanges inherently permits transactions to occur more quickly and may accommodate more complex and varied future contract terms than previously possible with open outcry exchange systems.

There is a whole category of assets, intangible assets, that have not been traded in futures exchange due to futures exchange limitations. An intangible asset is one that is salable although not material or physical in nature. Intangible assets may include, for instance, future royalties or profits on novels, plays, music and other artistic works or for the future salary income of an athlete or highly valued professionals. These intangible assets are more difficult to valuate than tangible assets and, as well, may have more complex contractual requirements associated with them. However, the benefits of the use of futures contracts, and trading thereof, apply equally to intangible assets as to tangible assets. Thus, there is a need for an electronic futures contract trading system for intangible assets.

Therefore, it is an object of the invention to provide methods and systems for future contracts trading of intangible assets in a computer-based futures exchange.

### Summary of the Invention

These and other objects of the invention are accomplished in accordance with the principles of the present invention by providing methods and systems for futures contract trading of intangible assets in a futures exchange.

In accordance with the invention, these methods and systems provide a computer-based futures exchange suitable for use by traders, including the general public, for trading of futures contracts of intangible assets. Intangible assets may include, but are not limited to, the future revenues and royalties from artistic works and earnings of professional athletes or highly valued employees, such as corporate executives. Intangible assets are those that have no material or physical manifestation. The intangible assets futures exchange may provide detailed information on the futures contract terms and real-time trading status such as buy and sell quotes. Quotes may be matched and executed automatically by the futures exchange. Data suitable for investor evaluation may be provided to traders. Computer-based models for sensitivity analyses of the effect of various factors on the valuation of intangible assets may also be provided. Futures contracts may be traded individually or by category grouping, i.e., future contracts funds. Futures contracts transactions may be made on-line for both initial offerings as well as subsequent futures contracts trading. Additionally, offer and contract terms for categories of intangible assets may be standardized in the futures exchange for trading simplification.

### Brief Description of the Drawings

These and other objects and advantages of the advantage will become apparent upon reading the following detailed description and upon reference to the drawings in which:
FIG. 1 is a block diagram illustrating an embodiment of the futures contract trading system for intangible assets in accordance with the present invention;
FIG. 2 is a logic flow diagram for an embodiment of the futures contract for intangible assets in accordance with the present invention;
FIG. 3 is a representation of a display for selecting futures contract categories that may be provided to traders in accordance with the present invention;
FIG. 4 is a representation of a display for selecting individual futures contracts selection that may be provided to traders in accordance with the present invention;
FIG. 5 is a representation of a display for determining future contracts trading status that may be provided to traders in accordance with the present invention;
FIG. 6 is a representation of a display for presenting future contract terms that may be provided to traders in accordance with the present invention;
FIG. 7 is a representation of a display for selecting related data that may be provided to traders in accordance with the present invention; and
FIG. 8 is a representation of a display of a sensitivity analysis worksheet that may be used by traders in accordance with the present invention.

### Detailed Description of The Preferred Embodiments

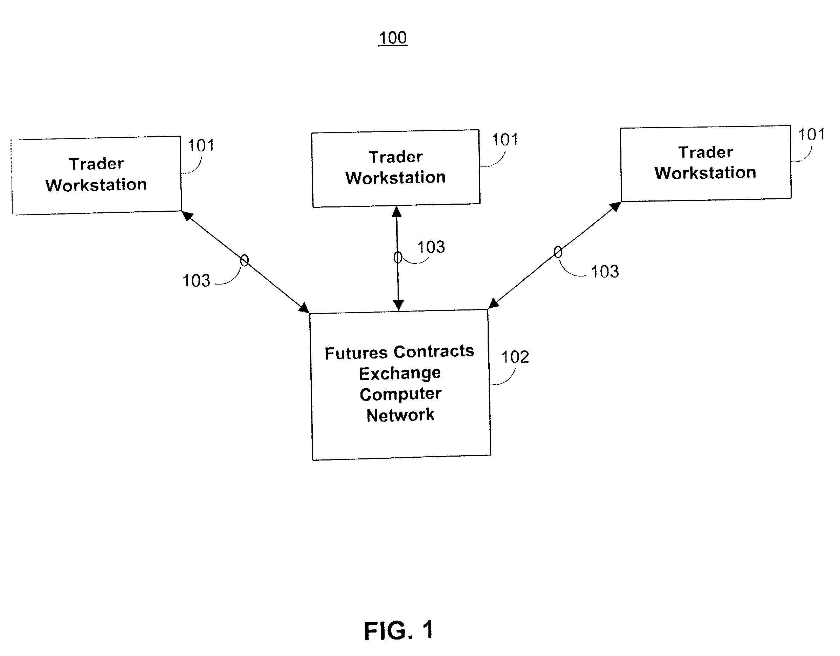

The present invention is directed to methods and systems for futures trading of intangible assets in a futures exchange. One example of a futures exchange system 100 is shown in FIG. 1. As illustrated, futures exchange system 100 may be a computer-based system where a trader, who may be a member of the general public, may utilize a trader workstation 101 to access a futures contracts exchange computer network 102. Three trader workstations 101 are shown in FIG. 1 to depict the potential for multiple traders, but any number of trader workstations may be used. Trader information may be communicated between the traders workstations 101 and the futures contracts exchange computer network 102 via a communications link 103. Communication links 103 may include, for example, an Internet link, a telephone network link, a cable or fiber optic link, a microwave link, a combination of such links, or any other suitable communication link. Control and processing in system 100 may be performed at work stations 101 or may be performed in a server that is part of network 102.

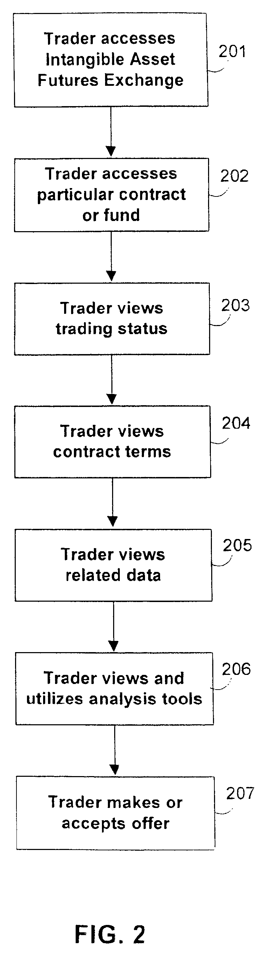

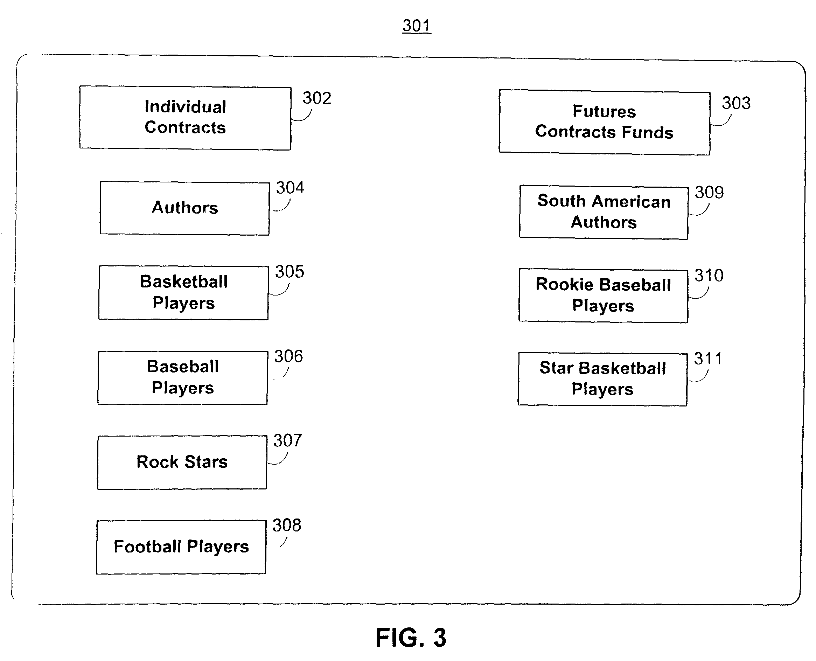

FIG. 2 depicts one embodiment of a process for futures contracts trading of intangible assets within the future exchange. At step 201, the trader may access the futures exchange by utilizing the trader workstation 101 which is communication with the futures contracts exchange computer network 102 via the communications link 103. The trader may, as shown at step 202, access lists of particular future contracts for individual contracts for intangible assets or futures contracts funds. FIG. 3 illustrates an example computer contracts menu 301 which the trader may observe by executing step 202. The various futures contracts available for trading in the futures exchange may be listed by category for both groups of individual contracts 302 or groups of futures funds 303. Futures contracts funds 303 are groups of individual futures contracts which may be grouped based on selected criteria and then may be traded as a whole. The trader may toggle through groups of individual contracts such as contracts of authors 304, basketball players 305, baseball players 306, rock stars 307 and football players 308, for instance. Alternatively, the trader may toggle through groups of futures contracts funds such as South American authors 309, rookie baseball players 310 or star basketball players 311, for instance.

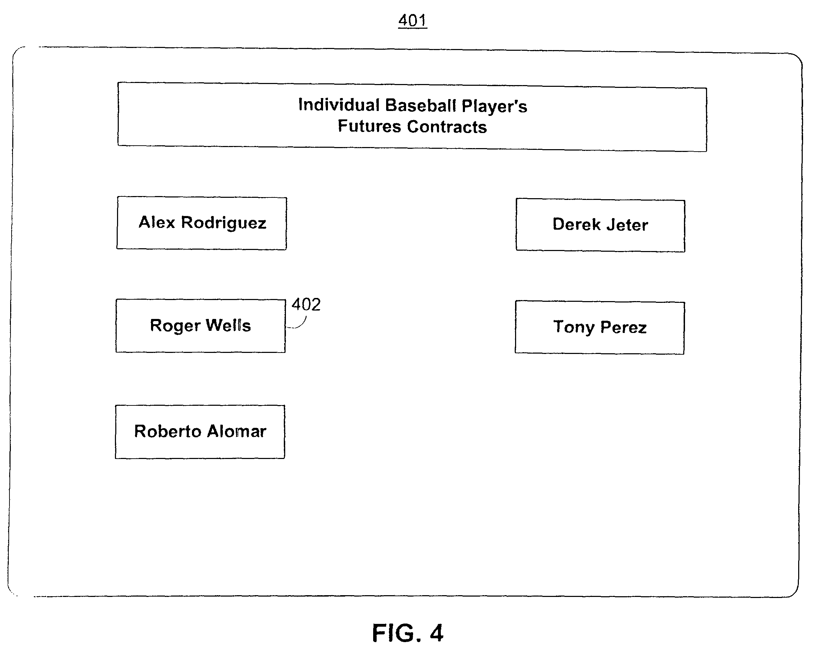

If, as shown in FIG. 3, a trader selects the available individual contracts for baseball players 306, then, as shown in FIG. 4, a list of individual baseball player contracts 401, for instance, may be depicted in a menu.

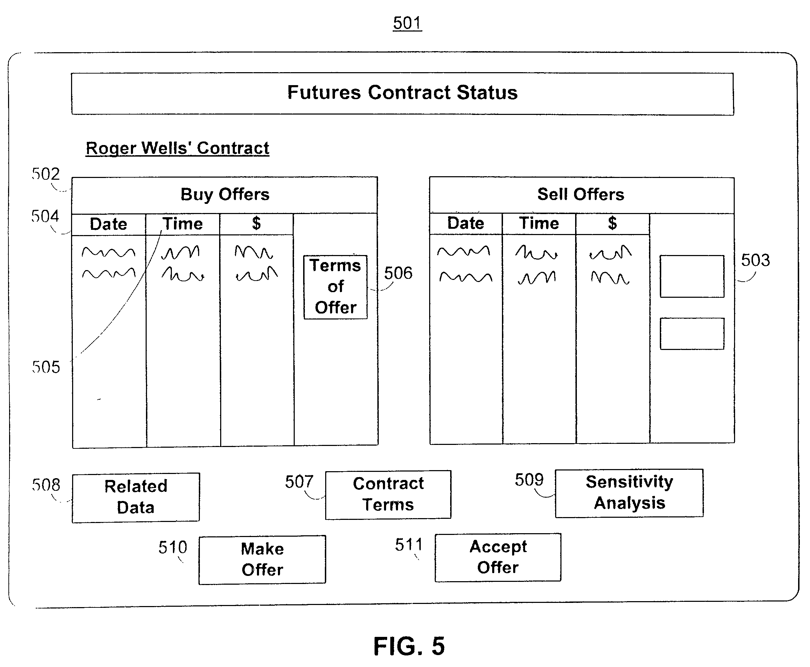

Returning to FIG. 2, at step 203, a trader may choose to view the trading status, such as, for instance, buy-sell quotes for a particular futures contract. As depicted in FIG. 4, if a trader selected the "ROGER WELLS" 402 contract, a depiction 501 of the real-time status of pending buy offers 502 and sell offers 503 may be viewable by the trader as depicted in the illustrative example shown in FIG. 5. The date 504 and time 505 of the pending offer may be shown. Further, the offer terms, such as margin amount, offer expiration date, etc., may be viewed by selecting "TERMS OF OFFER" 506.

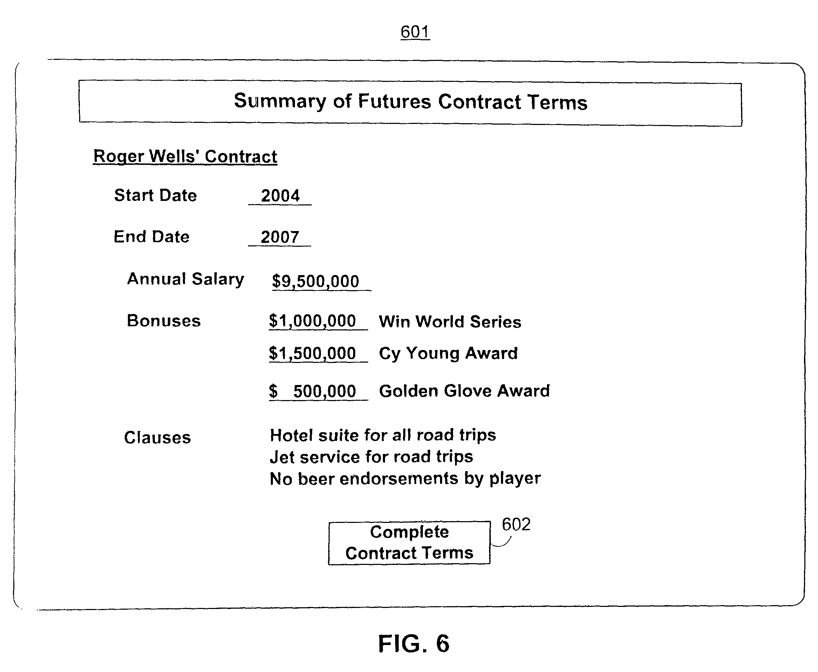

Returning to FIG. 2, at step 204, a trader may choose to view the terms of the specific futures contract. If, as shown in FIG. 5, a trader selects "CONTRACT TERMS" 507, the trader may view a summary of futures contract terms 601 of an individual player's contract as depicted in FIG. 6. Additionally, the trader may select "DETAILED CONTRACT TERMS" 602 to view all contract text. The summary of futures contract terms 601 may represent the agreed-upon terms for future performance between an individual baseball player and a baseball team, for instance. The futures contract may then be assigned to a trader by the baseball team, for example, for monetary consideration -- this transaction may be executed via, for instance, the futures exchange of the present invention. The futures contract may be subsequently traded, again, for instance, via the futures exchange. The trader holding the futures contract at the time of the contract start date must fulfill the terms of the contract to the baseball player. The trader holding the futures contract at that future time may then, however, sell the services of the baseball player to any baseball team, for instance, for greater or less than the contract terms. Futures contract may have been bought and sold several times prior to the contract start date. Traders typically execute transactions anticipating a future value change of the futures contract. Thus, traders analyze futures contracts by attempting to project the future worth of a contract and then calculate a present worth value. If the projected present worth varies from the selling price, a trader may then choose to execute a buy for potential financial benefit. Economic analysis of intangible assets may be more difficult than for tangible assets because of the complexity of contracts and the numerous factors that may affect contract performance.

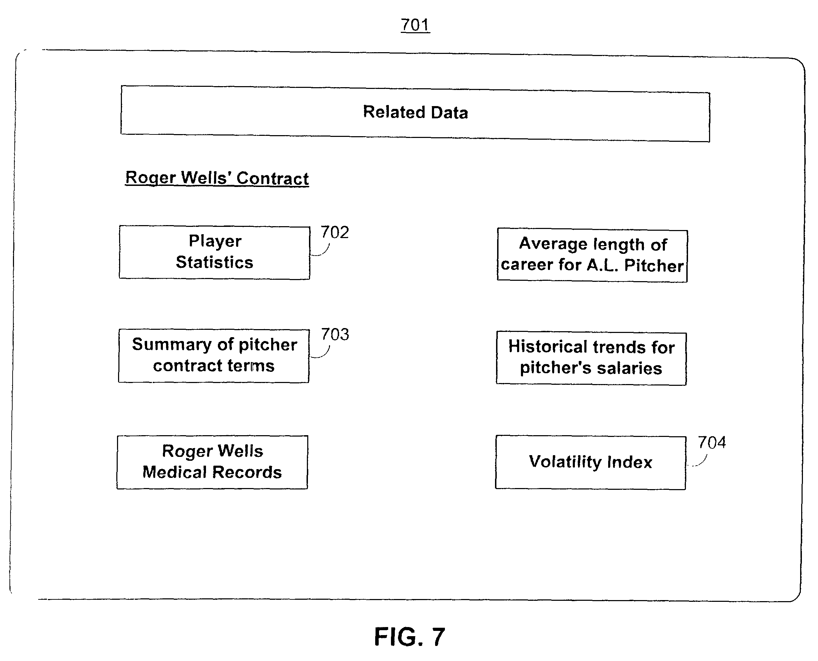

Therefore, to facilitate the general public's access to the futures exchange, a trader may be provided data and analysis tools in the futures exchange system to facilitate future contracts evaluation. Returning to FIG. 2, at step 205, a trader may choose to review related data. As shown in FIG. 5, a trader may select "RELATED DATA" 508 for a particular futures contract. As depicted in FIG. 7, related data may then be viewed by the trader.

As shown in FIG. 7, related data may include data specific to the player, such as "PLAYER STATISTICS" 702, or may include data for category types, such as "SUMMARY OF PITCHER CONTRACT TERMS" 703. Additionally, financial analysis information, such as the volatility index 704, which represents the potential level of variability of this type of contract relative to other securities, for instance, may be provided to the trader.

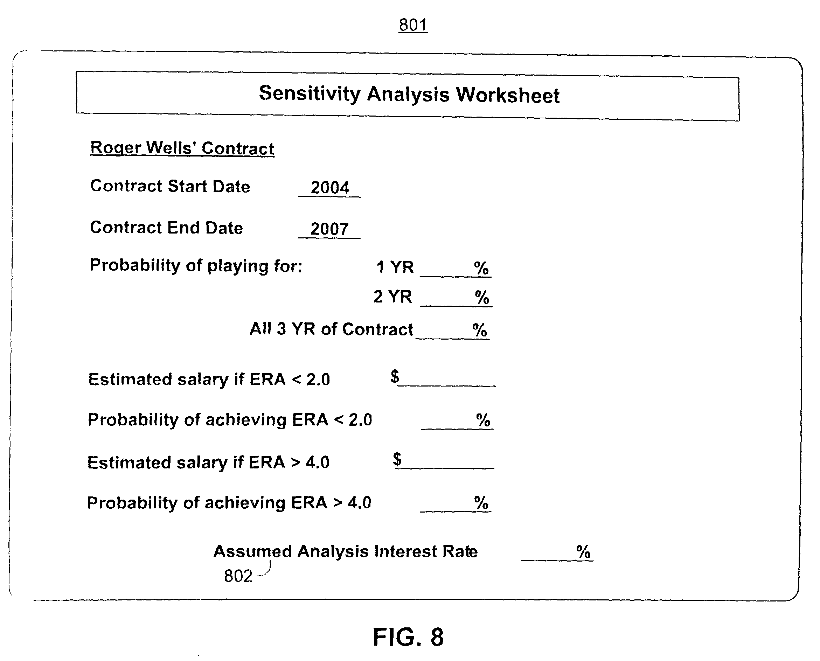

Returning to FIG. 2, at step 206, a trader may view and utilize futures contracts analysis tools, such as sensitivity analysis, for instance, provided in the futures exchange system. As depicted in FIG. 8, a trader may execute a "what if" sensitivity analysis where the trader may input potential probabilities of events and estimated future worth of contract elements. Additionally, a trader may input alternative projected interest rates 802 estimated for the remainder of the futures contract. Utilizing the input information, the analysis tools of the futures exchange system may provide the user with, for instance, a matrix of potential future contract amounts calculated as present worth based on alternative assumptions utilized by the trader. This matrix may be used to determine the sensitivity of the value of the futures contract based on variable factors.

Returning to FIG. 2, at step 207, an offer or acceptance of trade for a particular contract may be executed by a trader. Referring to FIG. 5, a trader may select "MAKE OFFER" 510 to post a buy or sell offer or "ACCEPT OFFER" 511 to execute a trade.

Execution of a trade of a futures contract or a futures contracts fund may be made automatically by matching of buy and sell offers by the futures exchange. Alternatively, a bid/offer-hit/take trading system may be utilized.

In an alternative embodiment, both the terms of offer 502 and the contract terms 507 for categories of intangible assets may be standardized to simplify trading and speed transactions.

## Claims

1. A method for trading of intangible assets in a computer-based futures exchange system, comprising:
accessing a listing of a plurality of intangible asset futures contracts;
selecting an intangible asset futures contract from the listing; and
viewing trading status of the selected intangible asset futures contract.

2. The method of claim 1, further comprising executing a trade of intangible asset futures contracts in a futures contract fund.

3. The method of claim 1, further comprising executing a trade of the intangible asset futures contract.

4. The method of claim 1, further comprising viewing the intangible asset futures contract's terms of contract.

5. The method of claim 1, further comprising viewing the intangible asset futures contract funds terms of contract.

6. The method of claim 1, further comprising providing data related to the intangible asset futures contract.

7. The method of claim 2, further comprising providing data related to the intangible asset futures contract funds.

8. The method of claim 1, further comprising utilizing analysis tools related to the intangible asset futures contract.

9. The method of claim 2, further comprising utilizing analysis tools related to the intangible asset futures contract fund.

10. A system for trading of intangible assets comprising an equipment of a futures exchange system configured to access a listing of a plurality of intangible asset futures contracts, select an intangible asset futures contract from the listing, and view the trading status of the selected intangible asset futures contract.

11. The system of claim 10, wherein the equipment of a futures exchange system is configured to execute a trade of an intangible asset futures contract.

12. The system of claim 10, wherein the equipment of the futures exchange system is configured to execute a trade of intangible asset futures contracts in a futures contracts fund.

13. The system of claim 12, wherein the equipment of the futures exchange system is configured to access a listing of intangible asset future contracts funds, select an intangible asset futures contract fund from the listing, and view trading status of the selected intangible asset futures contracts fund.

14. The system of claim 10, wherein the equipment of the futures exchange system is configured to view the intangible asset futures contracts terms of contract.

15. The system of claim 10, wherein the equipment of the futures exchange system is configured to provide data related to the intangible asset futures contract.

16. The system of claim 10, wherein the equipment of the futures exchange system is configured to provide data related to the intangible asset futures contract fund.

17. The system of claim 10, wherein the equipment of the futures exchange system is configured to allow utilization of analysis tools related to the intangible asset futures contract.

18. The system of claim 12, wherein the equipment of the futures exchange system is configured to allow utilization of analysis tools related to the intangible asset futures contract fund.

19. The system of claim 10, wherein the equipment of the futures exchange system is configured to execute the trade of the intangible asset futures contract by matching of a buy offer and a sell offer.

20. The system of claim 12, wherein the equipment of the futures exchange system is configured to execute the trade of the intangible asset futures contract fund by matching of buy offers and sell offers.

21. A system of trading of intangible asset futures contracts in a computer-based futures exchange system, wherein the equipment of the futures exchange system offers standard intangible asset offer terms for transactions.

22. A system of trading of intangible asset futures contracts in a computer-based futures exchange system, wherein the equipment of the futures exchange system offers standard intangible asset futures contract terms.

23. The system of claim 22 wherein the standard intangible asset futures contract terms are categorized based on categories of intangible asset futures contracts.
